# EUROPÄISCHE PATENTSCHRIFT

(11) **EP 3 028 561 B1**
(45) Veröffentlichungstag und Bekanntmachung des Hinweises auf die Patenterteilung: **18.10.2017**
(21) Anmeldenummer: 15194881.7
(22) Anmeldetag: 17.11.2015
(51) Int. Cl.: A01F 15/07

(54) **FESTKAMMERPRESSE**
FIXED CHAMBER PRESS
PRESSE À CHAMBRE FIXE

(30) Priorität: 03.12.2014 DE 102014017783; 04.02.2015 DE 102015001268
(43) Veröffentlichungstag der Anmeldung: 08.06.2016
(73) Patentinhaber: Usines Claas France S.A.S, 57140 St. Rémy / Woippy (FR)
(72) Erfinder: Meaux, Fabien, 57000 Metz (FR); Rongvaux, Laurent, 5700 Metz (FR)
(74) Vertreter: Budach, Steffen

(56) Entgegenhaltungen:
- EP-A1- 2 392 205
- DE-A1-102004 002 976
- US-A- 4 979 442
- US-A1- 2009 049 817

## Beschreibung

Die vorliegende Erfindung betrifft eine Festkammerpresse zum Formen von Ballen aus verdichtetem landwirtschaftlichem Erntegut, wie aus DE 34 32 265 A bekannt. Die Presskammer einer solchen Presse ist durch Rollen begrenzt, deren Drehachsen am Gehäuse der Presse ortsfest sind, so dass die Abmessungen der Presskammer unveränderlich sind. In einer solchen Presskammer einen Ballen in Drehung zu versetzen gelingt erst dann, wenn die Presskammer bereits weitgehend mit Erntegut angefüllt ist. Ein auf diesem Wege erhaltener Ballen ist jedoch allenfalls an seinem äußeren Umfang verdichtet; das Innere bleibt locker. Außerdem neigt der Ballen dazu, zu zerfallen, wenn die feste Außenlage teilweise entfernt ist, was die Portionierung des Pressgutes beim Verfüttern an Tiere erschwert.
Bei Ballenpressen mit variabler Presskammer genügt eine geringere Menge an Erntegut, um einen Ballen zu bilden, der in der Presskammer in Drehung versetzt und verdichtet werden kann. Die Variabilität der Presskammer wird erreicht, indem auf einem Teil des Umfangs der Presskammer die Presswalzen durch endlos umlaufende Pressriemen ersetzt werden. Der Pressdruck, der mit Pressriemen ausgeübt werden kann, ist jedoch deutlich niedriger; dementsprechend geringer ist die Dichte der mit einer solchen variablen Presskammer erzeugten Ballen.

Aufgabe der Erfindung ist, eine Festkammerpresse zu schaffen, mit der stark und gleichzeitig homogen verdichtete Ballen erzeugt werden können.

Die Aufgabe wird gelöst, indem bei einer Festkammerpresse für Rundballen, bei der Rollen, die eine Presskammer zur Aufnahme und Verdichtung von Erntegut radial außenseitig begrenzen, auf eine erste und eine zweite Gehäusehälfte verteilt sind, bei der die erste Gehäusehälfte eine Öffnung (8) zur Aufnahme des Erntegutes aufweist und die zweite Gehäusehälfte relativ zu der ersten Gehäusehälfte verlagerbar ausgebildet ist, mindestens ein umlaufender Gurt zumindest teilweise innerhalb der Presskammer angeordnet ist. Obwohl die Presskammer als solche nicht veränderlich ist, kann der Gurt, indem er sich innerhalb der Presskammer erstreckt, einen Bereich der Presskammer abteilen, in den das Erntegut nicht vordringen kann, und so die für den Beginn der Ballenbildung erforderliche Erntegutmenge verringern. Wenn hingegen am Ende der Ballenbildung der Ballen den Gurt gegen die von ihm umschlungenen Rollen drückt, kann eine hohe Verdichtung auch bei geringer Spannung des Gurts erreicht werden. Die Verdichtung ist also insbesondere in der Endphase der Ballenbildung nicht mehr durch die Zugbelastbarkeit des Gurts begrenzt, stattdessen werden die Presskräfte im Wesentlichen von den Lagern der Rollen aufgenommen.

Die Rollen sind zweckmäßigerweise auf einem sich um die Presskammer erstreckenden Bogen gleichmäßig verteilt, wobei zwei an den Enden des Bogens angeordnete Rollen die Öffnung begrenzen.

Um einen ausreichend weiten Eingriff in die Presskammer zu ermöglichen, sollten mehrere der Rollen von dem Gurt umschlungen sein.

Um eine Auslenkung des Gurts auch zwischen zwei benachbarten Rollen unter dem Druck des Ballens in Grenzen zu halten, ist ein geringer Abstand zwischen den Rollen grundsätzlich von Vorteil. Daher sollte die Breite der Lücke vorzugsweise maximal ein Viertel des Radius der benachbarten Rollen betragen; eine untere Grenze für die Breite der Lücke ist durch die Anforderung vorgegeben, dass die Rollen im Betrieb nicht aneinander schleifen dürfen.

Der Einfachheit und Robustheit halber sollten die Rollen der hochklappbaren Gehäusehälfte, im Allgemeinen der hinteren Gehäusehälfte, um an dieser hinteren Gehäusehälfte feste Achsen drehbar sein.

Wenn die Rollen auf einem Kreis um die Presskammer angeordnet sind, sollten die von dem Gurt umschlungenen Rollen über wenigstens ein Drittel des Umfangs des Kreises verteilt sein, damit zu Beginn der Ballenbildung der nutzbare Bereich der Presskammer durch einen sich geradlinig zwischen den umschlungenen Rollen erstreckenden Abschnitt des Gurts wirksam verkleinert werden kann.

Die Zahl der von dem Gurt umschlungenen Rollen beträgt vorzugsweise von 6 bis 12. Wenn mit einer kleineren Zahl von Rollen die erfindungsgemäß angestrebte schmale Lücke zwischen benachbarten Rollen erreicht werden soll, müssen diese einen entsprechend großen Durchmesser haben, und das von ihnen belegte Volumen ist nicht mehr für die Presskammer nutzbar. Andererseits führt eine unnötig hohe Zahl von Rollen zu einem komplizierten Aufbau und dementsprechend hohen Kosten.

Eine Riemenspanneinrichtung kann eine von dem Gurt umschlungene Umlenkrolle und eine an einer Außenseite des Gurts anliegende Umlenkrolle umfassen, von denen wenigstens eine durch ein Spannglied gegen den Gurt beaufschlagt und relativ zu den Gehäusehälften beweglich ist.

Als einfaches, kostengünstiges Spannglied kann eine Feder verwendet werden. Um eine Feder, die bei zunehmender Auslenkung des Gurts durch Erntegut in der Presskammer gedehnt wird, platzsparend montieren zu können, ist es zweckmäßig, wenn die bewegliche Umlenkrolle, an der die Feder angreift, die an der Außenseite des Gurts anliegende Umlenkrolle ist.

Alternativ zu der Feder, vorzugsweise in Kombination mit ihr, kann auch ein Linearstellglied, insbesondere ein hydraulischer oder pneumatischer Stellzylinder, als Spannglied Verwendung finden. In der Kombination erlaubt das Linearstellglied, die Spannung der Feder bei gegebener Ballengröße zu variieren und so an die Verdichtbarkeit des Ernteguts anzupassen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch eine erfindungsgemäße Festkammerpresse zu Beginn der Ballenbildung;
- Fig. 2: einen zu Fig. 1 analogen Schnitt gegen Ende der Ballenbildung;
- Fig. 3: einen Schnitt gemäß einer ersten Abwandlung;
- Fig. 4: einen Schnitt gemäß einer zweiten Abwandlung; und
- Fig. 5: einen Schnitt gemäß einer dritten Abwandlung der Erfindung.

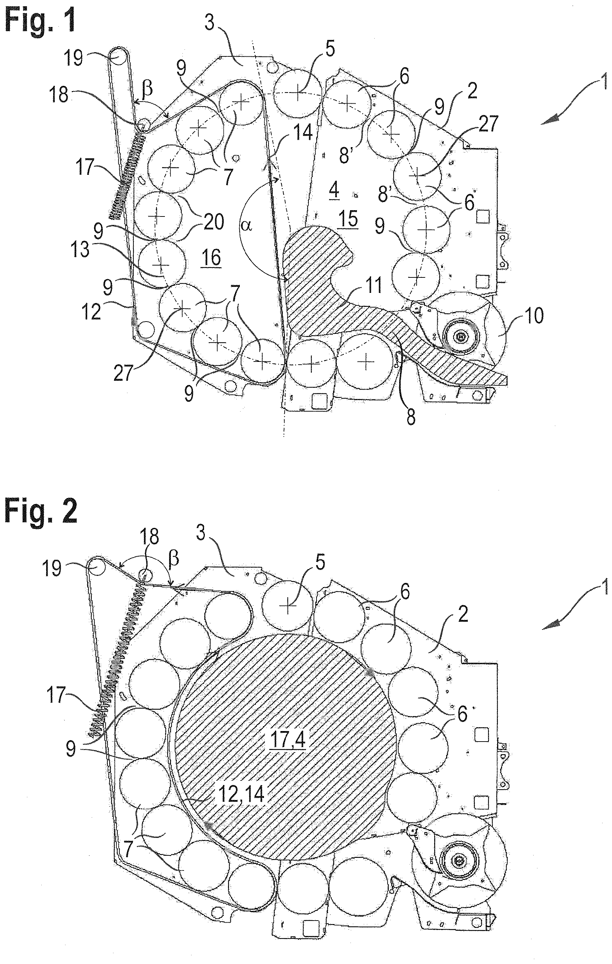

Fig. 1 zeigt eine Festkammerpresse 1 und Teile ihrer inneren Komponenten in einem schematischen Schnitt. Die Festkammerpresse 1 hat ein Gehäuse mit einer vorderen und einer hinteren Gehäusehälfte 2,3 die eine Presskammer 4 umschließen. Die Gehäusehälften 2, 3 sind um eine Achse 5 schwenkbar miteinander verbunden, so dass die hintere Gehäusehälfte 3 hochgeklappt werden kann, um die Presskammer 4 zu öffnen und einen fertigen Ballen daraus zu entlassen.

Verteilt auf vordere und hintere Gehäusehälfte 2, 3 sind auf einem Kreis 13 um die Presskammer 4 zahlreiche Rollen 6, 7 angeordnet. Die Rollen 6, 7 sind in ortsfesten Lagern an Seitenwänden der Gehäusehälften 2, 3 um Achsen 27 drehbar gehalten. Sie bilden eine nahezu geschlossene Wand um die Presskammer 4 herum. Eine große Lücke 8 zwischen den Rollen 6 befindet sich im unteren Teil der vorderen Gehäusehälfte 2, benachbart zu einer Messerwalze 10, die das Erntegut 11 zerkleinert, unmittelbar bevor es über die Lücke 8 in die Presskammer 4 eintritt. Zwei weitere, deutlich engere Lücken 8' an der vorderen Gehäusehälfte 2 dienen zum Einführen von Bindegarn oder Umhüllungsfolie, durch die ein fertiger Ballen zusammengehalten wird. Die Breite aller übrigen Lücken 9 zwischen zwei Rollen 6, 7 beträgt jeweils nur einen kleinen Bruchteil von deren Radius, insbesondere in der hinteren Gehäusehälfte 3 sind die von einem gemeinsamen Gurt 12 umschlungenen Rollen 7 so eng gestaffelt, dass sie einander soeben nicht berühren.

Die von dem Gurt 12 umschlungenen Rollen 7 nehmen am Umfang der Presskammer 4 einen Winkel α von knapp 180°, hier ca. 170°, ein, so dass ein Abschnitt 14 des Gurts 12, der sich zwischen den Presswalzen 7 geradlinig durch die Presskammer 4 erstreckt, diese in nahezu gleich große Teile 15, 16 gliedert, von denen der hintere 16 für das Erntegut 11 nicht erreichbar ist. Es genügt daher eine kleine Menge an Erntegut 11, um den vorderen Teil 15 der Presskammer 4 so weit zu füllen, dass zwischen den Rollen 6 der vorderen Gehäusehälfte 2 und dem Abschnitt 14 des Gurts 12 eine Verdichtung des Ernteguts 11 einsetzen kann.

Um den zum Verdichten erforderlichen Druck auf das Erntegut 11 ausüben zu können, ist der Gurt 12 durch eine Zugfeder 17 straff gespannt gehalten, die an einer beweglichen, an einer Außenseite des Gurts 12 anliegenden Umlenkrolle 18 angreift und diese gegen den Gurt 12 beaufschlagt. Eine von dem Gurt 12 umschlungene zweite Umlenkrolle 19 ist mit fester Achse an der hinteren Gehäusehälfte 3 gelagert.

Wenn die Menge des Ernteguts 11 in der Presskammer zunimmt, wird der Abschnitt 14 des Gurts 12 immer weiter in den hinteren Teil 16 der Presskammer 4 hineingedrückt, wobei die Zugfeder 17 gedehnt wird. Der Druck, den der Gurt 12 auf das Erntegut 11 ausüben kann, ist durch die Spannung der Zugfeder 17 begrenzt und darf die Zugbelastbarkeit des Gurts 12 nicht überschreiten. Da sich der Druck des Gurts 12 mit zunehmender Größe des Ballens auf eine immer größer werdende Länge des Abschnitts 14 verteilt, ist es insbesondere gegen Ende des Pressvorgangs schwierig, den erforderlichen Pressdruck über den Gurt 12 bereitzustellen. Sobald jedoch der Abschnitt 14 des Gurts 12 von Innen gegen die Rollen 7 der hinteren Gehäusehälfte 3 gedrückt wird, üben auch diese Pressdruck auf das Erntegut aus, und die Spannung des Gurts 12 ist allenfalls noch erforderlich, um zu verhindern, dass das Erntegut 11 in die Zwickel 20 zwischen den Rollen 7 hineingedrückt wird.

Wenn Erntegut 11 in die Zwickel zwischen benachbarten Rollen eindringt, ist der Ballen 21 schwer zu drehen. Ein Steckenbleiben des Ballens 21 kann dennoch vermieden werden, da die Gummioberfläche des Gurts 12 sowohl zum Ballen 21 als auch zu den Rollen 7 einen hohen Reibungskoeffizienten aufweist. Die über den Gurt 12 auf den Ballen 21 ausgeübte Antriebskraft genügt daher, um diesen trotz des Widerstandes von in Zwickel zwischen den Rollen 6 der vorderen Gehäusehälfte 2 eingreifenden Ernteguts in Drehung zu versetzen. Wenn gewünscht, können auch Rollen 6 der vorderen Gehäusehälfte 2 von hier nicht dargestellten Gurten umschlungen sein, um dazwischenliegende Spalte 9 zu überbrücken und so die zum Drehen des Ballens 21 erforderliche Antriebskraft zu verringern.

Fig. 2 zeigt die Rundballenpresse 1 gegen Ende des Ballenbildungsprozesses. Das verdichtete Erntegut 11 ist zu einem zylindrischen Ballen 21 geformt, der die Presskammer 4 ausfüllt und den Gurt 12 an die von ihm umschlungenen Rollen 7 andrückt. Die Zugfeder 17 ist gedehnt, und der Winkel β, den der Gurt 12 beiderseits der beweglichen Umlenkrolle 18 bildet, ist deutlich größer als zu Beginn der Ballenbildung in Fig. 1 und ist nur wenig kleiner als 180°. Je näher an 180° dieser Winkel β ist, umso größer ist auch das Verhältnis zwischen der Spannung des Gurts 12 und der diese Spannung erzeugenden Zugkraft der Feder 17. Die Spannung des Gurts 12 nimmt daher mit zunehmender Größe des Ballens 21 stark zu und kann so eine ausreichende Verdichtung des Ballens 21 auch dann bereits gewährleisten, wenn dieser noch nicht groß genug ist, um den Gurt 12 gegen die Presswalzen 6 zu drücken.

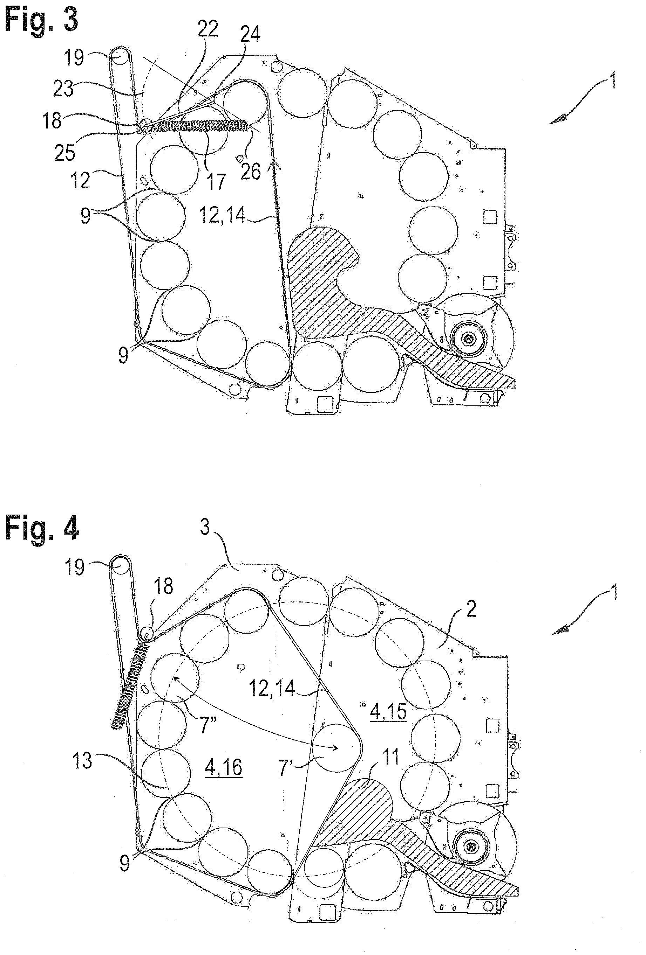

Umgekehrt führt eine niedrige Spannung des Gurts 12 zu Beginn der Ballenbildung zu einer geringen Verdichtung im Kernbereich des Ballens 21, und auch wenn die äußeren Schichten des Ballens 21 anschließend unter hohem Druck verdichtet werden, führt dies nicht zwangsläufig zu einer ausreichenden Nachverdichtung des Ballenkerns. Es kann daher zweckmäßig sein, gerade zu Beginn der Ballenbildung eine hohe Spannung des Gurts 12 aufbauen zu können, um einen dichten Ballenkern zu erhalten. Der in Fig. 3 gezeigten Abwandlung zu Folge ist die bewegliche Umlenkrolle 18 von einem Lenker 22 auf einer Kreisbahn 23 geführt, und die Zugfeder 17 ist so platziert, dass eine Schwenkachse 24 des Lenkers 22 und Angriffspunkte 25, 26 der Feder 17 an der Umlenkrolle 18 und an der hinteren Halbschale 3 ein Dreieck bilden, dessen längste Seite sich zwischen den Angriffspunkten 25, 26 erstreckt. Auch hier wird die Zugfeder 17 umso stärker gedehnt, je weiter der Abschnitt 14 des Pressriemens 12 durch den wachsenden Ballen 21 ausgelenkt wird, aber der Anteil der Federkraft, der in Bewegungsrichtung der Umlenkrolle 18 wirkt, wird umso kleiner, je flacher das Dreieck der Punkte 24, 25, 26 wird. Die Spannung des Gurts 12 nimmt daher gegen Ende des Pressvorgangs nur wenig zu. Deswegen kann bereits zu Anfang eine höhere Spannung eingestellt werden, ohne dass dies am Ende des Pressvorgangs zu einer Überbelastung des Gurts 12 führt.

Fig. 4 zeigt eine weitere Variante, bei der eine der Rollen 7 der hinteren Halbschale 3 zwischen einer mit 7' bezeichneten Stellung, in der sie den quer durch die Presskammer 4 verlaufenden Abschnitt 14 des Gurts 12 zur vorderen Halbschale 2 hin auslenkt, und einer Stellung 7" beweglich ist, in der sie zusammen mit den übrigen Rollen 7 auf dem Kreis 13 liegt. In der vorgerückten Stellung 7' der Rolle ist der für das Erntegut 11 erreichbare vordere Teil 15 der Presskammer 4 gegenüber den Ausgestaltungen der Figuren 1 bis 3 abermals verkleinert, so dass in einem noch früheren Stadium der Ballenbildung mit dem Pressen begonnen werden kann, zum anderen wird durch die Auslenkung die Spannung des Gurts 12 in dieser Anfangsphase erhöht, was ebenfalls die Verdichtung des Ballenkerns verbessert.

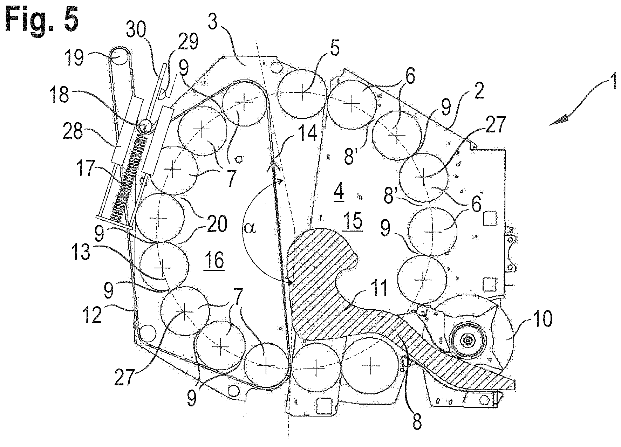

Fig. 5 zeigt zwei unabhängig voneinander realisierbare Weiterbildungen der Erfindung anhand eines auf der Ausgestaltung der Fig. 1 und 2 basierenden Ausführungsbeispiels; die Weiterbildungen sind jedoch auch an den Ausgestaltungen der Fig. 3 und 4 realisierbar.

Der ersten Weiterbildung zufolge ist das von der Umlenkrolle 18 abgewandte Ende der Zugfeder 17 nicht unmittelbar ortsfest an der hinteren Halbschale 3 verankert, sondern mit dieser über ein Linearstellglied, hier einen hydraulischen oder pneumatischen Stellzylinder 28, verbunden. Mit Hilfe dieses Stellzylinders 28 kann die Spannung des Gurts 12 zu Beginn der Ballenbildung willkürlich eingestellt werden, um sie z.B. an eine je nach Feuchtegehalt des Ernteguts 11 unterschiedliche Komprimierbarkeit anzupassen.

Die zu Beginn der Ballenbildung eingestellte Position des Stellzylinders 28 kann während des gesamten Ballenbildungsprozesses beibehalten werden, denkbar ist aber auch, sie jeweils entsprechend der Größe des Ballens 21 anzupassen, um während der gesamten Ballenbildung optimale Verdichtungsbedingungen aufrecht erhalten zu können.

Der in Fig. 5 gezeigte Stellzylinder 28 ist des kompakteren Aufbaus wegen neben der Zugfeder 17 angeordnet und durch sie auf Druck belastet; ein Aufbau, bei dem Zugfeder 17 und Stellzylinder 28 in einer Reihe hintereinander angeordnet und beide auf Zug belastet sind, ist ebenfalls möglich.

Der zweiten Weiterbildung zu Folge ist ein Positionssensor 29 zum Erfassen der Position der Umlenkrolle 18 an einer die Bewegung der Umlenkrolle 18 führenden Schiene 30 angeordnet. Der Positionssensor kann mit einem Anzeigeinstrument am Armaturenbrett eines Zugfahrzeugs der Ballenpresse 1 verbunden sein, so dass ein Fahrer des Zugfahrzeugs anhand des Anzeigeinstruments den Fortschritt der Ballenbildung verfolgen und seine Navigation ggf. danach ausrichten kann.

Ergänzend oder alternativ kann der Positionssensor 29 mit einer Steuereinheit verbunden sein, die die Stellung des Stellzylinders 28 wie oben beschrieben jeweils entsprechend der Größe des Ballens 21 anpasst.

### Bezugszeichen

- 1: Rundballenpresse
- 2: vordere Gehäusehälfte
- 3: hintere Gehäusehälfte
- 4: Presskammer
- 5: Achse
- 6: Rolle
- 7: Rolle
- 8: Lücke
- 9: Lücke
- 10: Messerwalze
- 11: Erntegut
- 12: Gurt
- 13: Kreis
- 14: Abschnitt (des Gurts)
- 15: vorderer Teil (der Presskammer)
- 16: hinterer Teil (der Presskammer)
- 17: Zugfeder
- 18: Umlenkrolle
- 19: Umlenkrolle
- 20: Zwickel
- 21: Ballen
- 22: Lenker
- 23: Kreisbahn
- 24: Schwenkachse
- 25: Angriffspunkt
- 26: Angriffspunkt
- 27: Achse
- 28: Stellzylinder
- 29: Positionssensor
- 30: Schiene

## Patentansprüche

1. Festkammerpresse für Rundballen mit einer durch Rollen (6, 7) radial außenseitig begrenzten Presskammer (4) zur Aufnahme und Verdichtung von Erntegut, wobei die Rollen (6, 7) auf eine erste und eine zweite Gehäusehälfte (2, 3) verteilt sind, wobei die erste Gehäusehälfte eine Öffnung (8) zur Aufnahme des Erntegutes aufweist und die zweite Gehäusehälfte relativ zu der ersten Gehäusehälfte verlagerbar ausgebildet ist, **dadurch gekennzeichnet, dass** die Festkammerpresse mindestens einen umlaufenden Gurt aufweist, welcher zumindest teilweise innerhalb der Presskammer angeordnet ist.

2. Festkammerpresse nach Anspruch 1, **dadurch gekennzeichnet, dass** die Rollen (6, 7), auf einem sich um die Presskammer (4) erstreckenden Bogen gleichmäßig verteilt angeordnet sind, wobei zwei an den Enden des Bogens angeordnete Rollen (7) die Öffnung (8) begrenzen und mehrere der Rollen (7) von dem Gurt (12) umschlungen sind.

3. Festkammerpresse nach Anspruch 2, **dadurch gekennzeichnet, dass** die Breite der Lücken (9) zwischen den von dem Gurt (12) umschlungenen Rollen (7) maximal ein Viertel des Radius der Rollen (7) beträgt.

4. Festkammerpresse nach Anspruch 2 oder 3, **dadurch gekennzeichnet, dass** eine der beiden Gehäusehälften (3) hochklappbar ist und die von dem Gurt (12) umschlungenen Rollen (7) an der hochklappbaren Gehäusehälfte (3) um an dieser Gehäusehälfte (3) feste Achsen (27) drehbar gelagert sind.

5. Festkammerpresse nach einem der vorhergehenden Ansprüche 2-4, **dadurch gekennzeichnet, dass** die Rollen (6, 7) auf einem Kreis (13) um die Presskammer (4) angeordnet sind, wobei die von dem Gurt (12) umschlungenen Rollen (7) über wenigstens ein Drittel des Umfangs des Kreises (13) verteilt sind.

6. Festkammerpresse nach einem der vorhergehenden Ansprüche 2-5, **dadurch gekennzeichnet, dass** die Zahl der von dem Gurt (12) umschlungenen Rollen (7) von 6 bis 12 beträgt.

7. Festkammerpresse nach einem der vorhergehenden Ansprüche, **dadurch gekennzeichnet, dass** eine Gurtspanneinrichtung eine von dem Gurt (12) umschlungene Umlenkrolle (19) und eine an einer Außenseite des Gurts (12) anliegende Umlenkrolle (18) umfasst, von denen wenigstens eine (18) durch ein Spannglied gegen den Gurt (12) beaufschlagt und relativ zu den Gehäusehälften (2, 3) beweglich ist.

8. Festkammerpresse nach Anspruch 7, **dadurch gekennzeichnet, dass** der beweglichen Umlenkrolle (18) ein Positionssensor (29) zugeordnet ist.

9. Festkammerpresse nach Anspruch 7 oder 8, **dadurch gekennzeichnet, dass** das Spannglied eine Feder (17) umfasst.

10. Festkammerpresse nach Anspruch 7, 8 oder 9, **dadurch gekennzeichnet, dass** das Spannglied ein Linearstellglied umfasst.

11. Festkammerpresse nach einem der Ansprüche 7 bis 10, **dadurch gekennzeichnet, dass** das die bewegliche Umlenkrolle (18) die an der Außenseite des Pressriemens (12) anliegende Umlenkrolle (18) ist.

## Claims

1. A fixed chamber press for round bales comprising a pressing chamber (4) which is radially outwardly delimited by rollers (6, 7) for receiving and compacting crop material, wherein the rollers (6, 7) are distributed to a first and a second housing half (2, 3), wherein the first housing half has an opening (8) for receiving the crop material and the second housing half is adapted to be displaceable relative to the first housing half, **characterised in that** the fixed chamber press has at least one circulating belt which is at least partially arranged within the pressing chamber.

2. A fixed chamber press according to claim 1 **characterised in that** the rollers (6, 7) are arranged distributed uniformly on an arc extending around the pressing chamber (4), wherein two rollers (7) arranged at the end of the arc define the opening (8) and the belt (12) passes around a plurality of the rollers (7).

3. A fixed chamber press according to claim 2 **characterised in that** the width of the gaps (9) between the rollers (7) having the belt (12) passing around them is at a maximum a quarter of the radius of the rollers (7).

4. A fixed chamber press according to claim 2 or claim 3 **characterised in that** one of the two housing halves (3) is pivotable upwardly and the rollers (7) which have the belt (12) passing around them are mounted to the upwardly pivotable housing half (3) rotatably about axes (27) fixed at said housing half (3).

5. A fixed chamber press according to one of preceding claims 2 to 4 **characterised in that** the rollers (6, 7) are arranged on a circle (13) around the pressing chamber (4), wherein the rollers (7) which have the belt (12) passing around them are distributed over at least a third of the periphery of the circle (13).

6. A fixed chamber press according to one of preceding claims 2 to 5 **characterised in that** the number of rollers (6) which have the belt (13) passing around them is from 6 to 12.

7. A fixed chamber press according to one of the preceding claims **characterised in that** a belt tensioning device includes a direction-changing roller (19) which has the belt (12) passing around it and a direction-changing roller (18) bearing against an outside of the belt (12), of which rollers at least one (18) is urged by a tensioning member against the belt (12) and is moveable relative to the housing halves (2, 3).

8. A fixed chamber press according to claim 7 **characterised in that** a position sensor (29) is associated with the moveable direction-changing roller (18).

9. A fixed chamber press according to claim 7 or claim 8 **characterised in that** the tensioning member includes a spring (17).

10. A fixed chamber press according to claim 7, claim 8 or claim 9 **characterised in that** the tensioning member includes a linear adjusting member.

11. A fixed chamber press according to one of claims 7 to 10 **characterised in that** the moveable direction-changing roller (18) is the direction-changing roller (18) that bears against the outside of the pressing belt (12).

## Revendications

1. Presse à chambre fixe pour balles rondes, comprenant une chambre de pressage (4) limitée radialement extérieurement par des rouleaux (6, 7) pour recevoir et compacter du produit récolté, les rouleaux (6, 7) étant répartis sur une première et une seconde moitié de carter (2, 3), la première moitié de carter comportant une ouverture (8) pour recevoir le produit récolté, et la seconde moitié de carter étant conçue de manière déplaçable par rapport à la première moitié de carter, **caractérisée en ce que** la presse à chambre fixe comporte au moins une courroie périphérique qui est disposée au moins partiellement à l'intérieur de la chambre de pressage.

2. Presse à chambre fixe selon la revendication 1, **caractérisée en ce que** les rouleaux (6, 7) sont disposés en étant répartis uniformément sur un arc s'étendant autour de la chambre de pressage (4), deux rouleaux (7) disposés aux extrémités de l'arc limitant l'ouverture (8), et plusieurs des rouleaux (7) étant entourés par la courroie (12).

3. Presse à chambre fixe selon la revendication 2, **caractérisée en ce que** la largeur des interstices (9) entre les rouleaux (7) entourés par la courroie (12) est au maximum égale à un quart du rayon des rouleaux (7).

4. Presse à chambre fixe selon la revendication 2 ou 3, **caractérisée en ce qu'**une des deux moitiés de carter (3) est relevable, et les rouleaux (7) entourés par la courroie (12) sont montés à rotation sur la moitié de carter relevable (3) autour d'axes (27) fixes sur cette moitié de carter (3).

5. Presse à chambre fixe selon une des revendications précédentes 2 à 4, **caractérisée en ce que** les rouleaux (6, 7) sont disposés sur un cercle (13) autour de la chambre de pressage (4), les rouleaux (7) entourés par la courroie (12) étant répartis sur au moins un tiers de la périphérie du cercle (13).

6. Presse à chambre fixe selon une des revendications précédentes 2 à 5, **caractérisée en ce que** le nombre de rouleaux (7) entourés par la courroie (12) est de 6 à 12.

7. Presse à chambre fixe selon une des revendications précédentes, **caractérisée en ce qu'**un dispositif tendeur de courroie comprend une poulie de renvoi (19) entourée par la courroie (12) et une poulie de renvoi (18) appliquée contre un côté extérieur de la courroie (12), parmi lesquelles au moins une (18) est sollicitée contre la courroie (12) par un organe tendeur et est mobile par rapport aux moitiés de carter (2, 3).

8. Presse à chambre fixe selon la revendication 7, **caractérisée en ce qu'**à la poulie de renvoi mobile (18) est associé un capteur de position (29).

9. Presse à chambre fixe selon la revendication 7 ou 8, **caractérisée en ce que** l'organe tendeur comprend un ressort (17).

10. Presse à chambre fixe selon la revendication 7, 8 ou 9, **caractérisée en ce que** l'organe tendeur comprend un actionneur linéaire.

11. Presse à chambre fixe selon une des revendications 7 à 10, **caractérisée en ce que** la poulie de renvoi mobile (18) est la poulie de renvoi (18) appliquée contre la côté extérieur de la courroie de pressage (12).
